(19) Europäisches Patentamt
European Patent Office
Office européen des brevets

(11) **EP 0 891 487 B1**

(12) **EUROPÄISCHE PATENTSCHRIFT**

(45) Veröffentlichungstag und Bekanntmachung des Hinweises auf die Patenterteilung:
**25.06.2003 Patentblatt 2003/26**

(51) Int Cl.⁷: **F03D 11/04**

(21) Anmeldenummer: **97920647.1**

(22) Anmeldetag: **10.04.1997**

(86) Internationale Anmeldenummer:
**PCT/EP97/01788**

(87) Internationale Veröffentlichungsnummer:
**WO 97/039240 (23.10.1997 Gazette 1997/45)**

(54) **STILLGELEGTER SCHORNSTEIN ALS TURM FÜR EINE WINDTURBINE**

SHUT-DOWN CHIMNEY USED AS A TOWER FOR A WIND TURBINE

CHEMINEE MISE HORS SERVICE SERVANT DE TOUR POUR UNE TURBINE EOLIENNE

(84) Benannte Vertragsstaaten:
**AT DE ES FI GR IT**
Benannte Erstreckungsstaaten:
**AL LT LV RO SI**

(30) Priorität: **12.04.1996 DE 19614538**
**12.06.1996 DE 19623376**
**20.08.1996 DE 19633433**

(43) Veröffentlichungstag der Anmeldung:
**20.01.1999 Patentblatt 1999/03**

(73) Patentinhaber: **Bendix, Horst, Prof. Dr.-Ing**
**04207 Leipzig (DE)**

(72) Erfinder: **Bendix, Horst, Prof. Dr.-Ing**
**04207 Leipzig (DE)**

(74) Vertreter: **Effert, Bressel und Kollegen**
**Radickestrasse 48**
**12489 Berlin (DE)**

(56) Entgegenhaltungen:
**WO-A-92/08893**     **DE-A- 2 507 518**
**FR-A- 427 979**

**Beschreibung**

Die Erfindung betrifft ein Verfahren zur Herstellung einer Windenergieanlage, bei dem ein Kraftwerks- oder Industrieschornstein aus Stahlbeton als Turm für einen Windkonverter großer elektrischer Leistung mit einem Rotor mit im wesentlichen horizontal angeordneter Rotorachse und an derem einem Ende fliegend gelagerten Rotorflügeln verwendet wird und ein Stahlsockel zur Lagerung des Windkonverters derart auf den Schornstein aufgesetzt wird, dass die Rotorflügel den Schornstein in vorbestimmbaren Abstand passieren können. Ein solches verfahren ist aus WO-A- 9 208 893 bekannt.

Windenergieanlagen gehören zu den alternativen, umweltfreundlichen, erneuerbaren Engergiequellen und werden in zunehmendem Maße zur Erzeugung elektrischer Energie angewendet. Der Wind steht als Energiequelle steht nicht ununterbrochen und, nicht in gleichbleibender Intensität zur Verfügung. Es ist bekannt, daß Windenergieanlagen aus diesen Gründen vornehmlich in Gegenden, die häufig und markant hohe Windgeschwindigkeiten haben, aufgestellt werden.

In der Regel wird ein Turm aus einer Beton- oder Stahlkonstruktion oder einer Mischkonstruktion einschließlich dem zugehörigen Fundament errichtet und auf dem oberen Turmende ein Windkonverter mit Dreheinrichtung für die freie Rotation um 360° aufgesetzt (Hau, Windkraftanlagen, Springer Verlag, Berlin, 1988, Seite 388, 390). Mit Hilfe der Dreheinrichtung geschieht die konzentrische Drehung des Konverters in die jeweilige Windrichtung automatisch über entsprechende Meß- und Steuereinrichtungen. Die hohen Kostenanteile für Fundament und Turm sowie Probleme Fertigteiltürme oder deren Sektion zum Standort zu transportieren, beschränken die Arbeitshöhen der gebräuchlichen Konverter auf 20 bis 65 m Nabenhöhe bzw. Rotorachse. Die größte bisher bekannte Nenn-Leistung eines einzelnen Konverters wurde mit der Windenergieanlage GROWIAN und andere Prototypen mit etwa 1500 kW in Deutschland erreicht.

Dieser und anderen bekannten Ausführungen haftete jedoch der Nachteil der begrenzten Turmhöhe oder der zu hohen Investitionen für höhere Türme an, so daß in weniger windreichen Gegenden im Binnenland geringe Chancen für eine wirtschaftlich lohnende Energieanlage bestehen.

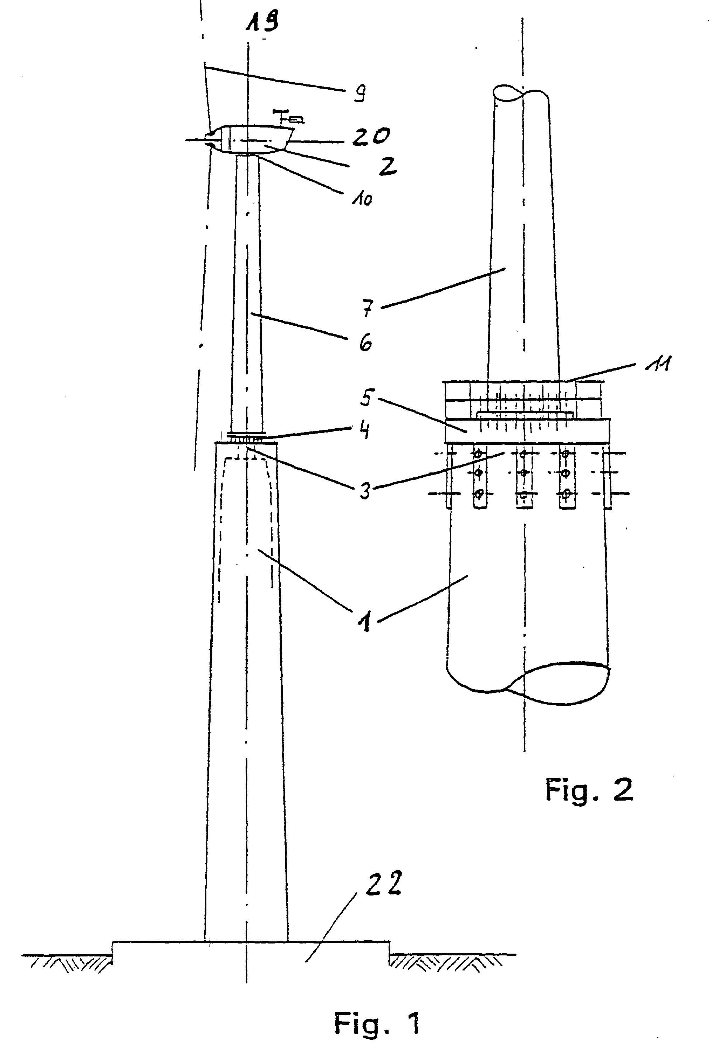

Grundsätzliche Untersuchungen über die Nutzung der Windenergie durch Windmühlen wurden veröffentlicht in einem Reprint aus 1926 in Betz, Wind-Energie, Ökobuchverlag, Stauffen, DE, 1982 mit Darstellungen über: Häufigkeitsverteilung vorherrschender Windgeschwindigkeiten, Abbildung 1; Verteilung der Jahresenergiemenge, Abbildung 34; Änderung der Windgeschwindigkeit in Abhängigkeit von der Meßhöhe, Abbildung 2; sowie theoretische Berechnungen für mögliche Leistungen von Windenergieanlagen, dargestellt für Windraddurchmesser bis 100 m in einem Nomogramm, Abbildung 10.

Diese grundsätzliche Schrift weist darauf hin, daß ausschließlich solche Rotoren mit Flügelprofil und horizontaler Achslage energetisch günstig sind, die den Auftrieb am Rotor als Parameter nutzen.

Für Großanlagen oberhalb von 1000 kW werden Windräder mit lotrechter Achse angegeben, jedoch energetisch als ungünstig dargestellt.

Aus der DE 31 06 777 A1 ist ein Windkraftwerk bekannt, bei dem hohe Türme z.B. ein Kamin mit 150 m Bauhöhe und 15 m Durchmesser offenbart sind, um die in vertikaler Achse Windräder rotieren sollen.

In ähnlicher Weise ist in der WO 92/08893 ein in Betrieb befindlicher Industriekamin oder Turm verwendet worden. Dort werden zwei Platten, gelagert an kurzen Tragarmen eines Tragringes am Schornsteinkopf oder Schornsteinschaft, benutzt, die aufgrund ihres Windwiderstandes um den in Betrieb befindlichen Schornstein rotieren.

Für beide Fälle gilt das von dem Autor Betz bereits festgestellte theoretische Prinzip, daß derartige durch Winddruck betriebene Windmühlen einen sehr schlechten Wirkungsgrad haben und Rotoren mit anderem Flügelprofil und horizontaler Achse weit unterlegen sind.

Keinerlei Offenbarung ist diesen Schriften zu entnehmen, ob die fakultativ angegebenen Kaminbauwerke ohne weiteres Verwendung finden können.

In der DE-PS 830 180 ist ein abgespannter Turm offenbart, an dem Konverter, die an dem Turm auf Kragarmen gelagert sind, und einen rotatorischen Freiheitsgrad um den Turm haben. Sobald starker Wind oder Sturm zu erwarten ist, sollen die Kragarme mit den Konvertern abgesenkt werden und gegebenenfalls die zum Absenken des Konverters benutzten Seile auch als Abspannseile des Turmes verwendet werden, um so zu vermeiden, daß der Sturm den Mast durchbiegt oder Resonanzschwingungen im Turm auftreten. Der Turm ist offensichtlich ein aus Stahlteilen bestehendes System mit gespreizten Stützfüßen.

Aus der DE-PS 742 242 ist ein Gitterturm bekannt mit rotatorisch um diesen Gitterturm frei drehbaren Gerüsten, an denen eine Vielzahl identischer Konverter gleicher Leistung angeordnet sind. Das System ist sehr bauaufwendig, sowohl was die Art des Turmes als auch der Traggerüste für Konverter geringer Leistung anlangt.

Aus der Druckschrift DE 25 07 518 A ist ein Stahlbetonturm bekannt, für den eine Mehrfachnutzung als Wasserturm und Träger für 3 oder mehr Großwindturbinen vorgeschlagen wurde. Ebenso ist auch die Mitnutzung als Schornstein erwähnt.

Als Turm für Windenergieanlagen großer Leistung mit horizontaler Rotorachse sind in Betrieb befindliche Schornsteine ungeeignet, da die gesamte Turbinenanlage auf der Schornsteinspitze Abgasen und starker Verschmutzung ausgesetzt und damit nach kurzer Zeit unbrauchbar wäre. Die Schornsteine sind auch nicht für hohe statische und dynamische Zusatzlasten ausgelegt, sodass eine Windturbine großer Leistung nicht ohne aufwändige Maßnahmen anbringbar wäre.

Weitere thematische Literaturfundstellen sind im Folgenden angegeben. Ihr Inhalt wird als Stand der Technik angesehen und zum Offenbarungsgehalt der vorliegenden Erfindung gemacht:

- Bundeswirtschaftsministerium, Erneuerbare Energien verstärkt nutzen, Bonn, DE, Mai 95, 3. Auflage
- Firmenschriften

  - ENERCON, Aurich, 26605
  - Tacke, Windtechnik, Salzbergen 48499
  - Micon, Randers-Denmark, 8900 DK

- DE-Zeitschrift: Sonnenenergie & Wärmetechnik, 1/96, Seite 22 - 27 und Seite 5
- Rauser, Steigerung der Leistungsausbeute von Windenergie-Konvertern, Herrengut, Baden-Baden, DE, 1983
- ISET-Schriftenreihe, Kassel 95 NMEP zum Breitentest 250 MW Wind, Jahresauswertung 1994
- Windmessungen in großer Höhe, Institut für Meteorologie und Klimatologie an der Universität Hannover, DE, 1996
- Berichte Deutscher Wetterdienst, Selbstverlag, Offenbach, DE 1983 und weitere Jahrgänge (bis 89)
- Bundesforschungsministerium Forschungsbericht T 85 - 146 Vermessungen des Windfeldes in verschiedenen Höhen ... und Bericht G. Tetzlaff, Windmessungen in großer Höhe, Eggenstein und Leopoldshafen, DE, 1986
- Müller, Fritz, Dynamische Berechnung von Massivschornsteinen, Hauptverband Deutsche Bauindustrie, 1977
- Fördergesellschaft Windenergie e.v. Windkraftkatalog Vulkan-Verlag, Essen, DE, 1989.

Von daher liegt der Erfindung das Problem zugrunde, ein Verfahren zur wirtschaftlichen Herstellung einer Windenergieanlage mit hoher Ausgangsleistung zur Verfügung zu stellen, bei der eine Rotorverschmutzung verringert wird.

Die Erfindung wird durch die Merkmale der Anspruches 1 gelöst. Weiterbildungen der Erfindung sind in den Unteransprüchen definiert.

Ausgangspunkt für die Erfindung sind die theoretischen Grundlagen über zunehmende Windgeschwindigkeiten in größeren als den mit bekannten Windenergieanlagen erreichbaren Höhen. Mit Höhe ist der Abstand zwischen dem Erdboden oder Fundament und der Rotorachse oder Nabe gemeint, welche im wesentlichen horizontal ausgerichtet ist, gegebenenfalls mit geringer Neigung, um eine genügend große Flügeldistanz zu dem Turm zu erreichen.

Windenergieanlagen erreichen dann sicher und schneller eine nachweisbare Wirtschaftlichkeit gegenüber marktüblichen Energiepreisen je höher der Jahresenergieertrag und je niedriger die notwendigen Investitionskosten zu deren Errichtung sind. Der Jahresenergieertrag ist in entscheidendem Maße abhängig von der am Standort auftretenden bzw. verfügbaren mittleren Windgeschwindigkeit. Die Leistung P errechnet sich aus der folgenden Formel:

$$P = C \times V^3 \times A$$

mit

C = Konstante in Abhängigkeit von der Luftdichte (kg pro m³)
V = momentane Windgeschwindigkeit (m/s)
A = vom Rotorflügel überstrichene Fläche, welche vollständig vom Wind angeströmt wird (m²)

Daraus ergibt sich, daß die Windgeschwindigkeit in den möglichen Energieertrag mit seiner dritten Potenz eingeht. Die mittlere Windgeschwindigkeit nimmt in den unteren atmosphärischen Bereichen bis zu einem bestimmten Grad mit zunehmender Höhe zu. Gegenüber der, vom Wetterdienst normalerweise angewandten, Meßhöhe beträgt die Windgeschwindigkeit in 100 m Höhe 50 % mehr, wodurch sich theoretisch der drei- bis fünffache Energieertrag gegenüber Windrädern in Bodennähe ergibt. Bei einem Höhenzuwachs von bisher üblichen Turmhöhen von etwa 50 m auf 150 m kann der Energieertrag insgesamt auf das 1,7- bis 2,2-fache wachsen, je nach Windgeschwindigkeit. Bereits mit den vergleichbaren Werten eines Konverters mit 70 m Nabenhöhe, das heißt Höhe der Rotorachse über Grund, mit Konvertern bei 110 m Nabenhöhe ergibt einen Zuwachs des Jahresenergieertrages von 50 %. Der Investitionsaufwand für alle erforderlichen Anlagenteile und Infrastrukturausrüstung steigt mit zunehmender Nabenhöhe des Konverters entscheidend an. Die wirtschaftlich vertretbaren, technisch realisierbaren Nabenhöhen sind daher begrenzt, so daß für große Konverter gegenwärtig maximal 65 bis 70 m Turmhöhe erreicht werden.

Größere Höhen können nur erreicht werden, wenn es gelingt die Nabenhöhe ohne extreme Steigerung des Bauaufwandes mit entsprechend schlanken und grazilen aber zugleich ausreichend stabilen Bauwerken zu erreichen. Als besonders geeignet haben sich dabei erfindungsgemäß vorhandene aber stillgelegte Industrie- und Kraftwerksschornsteine aus Stahlbeton erwiesen, welche derzeit in größerer Anzahl verfügbar werden, weil viele Kohlekraftwerke, Fernheizwerke und andere mit Kohle befeuerte Industrieanlagen stillgesetzt oder auf andere Brennstoffe umgerüstet werden. Die Umnutzung derartiger, nicht mehr benötigter Stahlbetonschornsteine ist wirtschaftlich vertretbar und bringt die notwendige Höherstellung des Windkonverters, um die beträchtlichen Investmentaufwendungen zu rechtfertigen. Besonders günstig ist in diesem Zusammenhang, daß die Kraftwerke in der Regel mit Energieerzeugungs- und Verteilungsanlagen ausgestattet waren und insofern die nachgeordneten Umspannanlagen und Fortleitungsinvestitionen größtenteils schon vorhanden sind.

In günstigen Fällen verringert sich daher der Investitionsaufwand für eine Windenergieanlage, die in über 100 m Höhe arbeitet, um mehr als 25 % der gesamtem Anlagekosten. Zu diesen Investitionskosten gehört bekanntlich nicht nur die Errichtung des Turmes, sondern auch die Zuwegung und die Anschlußmöglichkeit des Energieerzeugers an die Stromverteilungsinfrastruktur der Region.

Gedacht ist an Schornsteine, die Höhen zwischen 100 und 300 m erreichen, bei einem Basisdurchmesser von 25 m und einem Durchmesser an der Schornsteinspitze von 2 bis 7 m.

Bei näherer Betrachtung, ob noch andere Schornsteine, die nicht in Stahlbetonbauweise errichtet worden sind, verwendbar sind, wurde festgestellt, daß bei Großwindkraftanlagen mit Leistungen zwischen 600 kW und 1500 kW derartig hohe statische Lasten einschließlich Winddruck, insbesondere aber auch dynamische Lasten durch Schwingungen in das Bauwerk eingebracht werden, daß Schornsteine anderer Bauart nicht in frage kommen.

Um Überlastung des Bauwerkes zu vermeiden ist zunächst das Maß der möglichen statischen und dynamischem Belastbarkeit durch einen einzelnen oder mehrere Konverter zu bestimmen, der Schornstein dann auf die daraus errechneten bzw. verbleibenden Höhenmaße zurückzubauen, bevor der Konverter mit möglichst hoher Nabenhöhe installiert wird.

Aus diesen Gründen sind im wesentlichen nur die hohen Schornsteine aus Stahlbeton nutzbar.

Die so gekürzten Schornsteine können in der Regel nicht unmittelbar an ihrer Spitze mit einem Windkonverter der üblichen Art versehen werden, da die Rotorflügel in Kollision mit dem Schornsteinrand geraten. Zu berücksichtigen ist insbesondere, daß die Rotorflügel einen Freiraum zwischen den Flügeln und der Turmaußenkante haben müssen. Wenn dieser Freiraum zum Turm oder Schornstein nicht gewährleistet ist, können aerodynamische Stoßbelastungen auf den Rotorflügel bei jedem Vorbeibewegen am Schornstein entstehen, die zu Rotorflügelbrüchen und anderen Schäden einschließlich Schwingungsschäden im Schornstein führen.

Aus diesen Gründen ist für auf dem Schornsteinkopf, anzuordnende Windenergieanlagen zunächst sicherzustellen, daß der rückgebaute Schornstein, welcher häufig in einer so gekürzten Aufbauhöhe noch einen Durchmesser von 6 m besitzt zunächst mit einer Beton- oder Stahlkonstruktion als Sockel für den Konverter zu versehen ist, die einerseits eine Rotation des Rotorflügels abseits der Schornsteinkante ermöglicht, andererseits auch eine 360° Drehung des gesamten Konverters um die Schornsteinachse, um die Rotorflügel in jede beliebige Windrichtung stellen zu können oder für Montagearbeiten in bestimmte Positionen zu bringen.

Um diesen Freiraum für die Rotorflügel zu sichern, muß daher entweder auf den rückgebauten Schornstein ein Stahlturm mit einer Höhe entsprechend der Länge der Rotorflügel, was wiederum zu größeren Nabenhöhen führt und die Rotorflügel über dem Schornsteinkopf rotieren läßt oder es werden erfindungsgemäß andere Alternativen zur Gewährleistung eines Freiraumes zwischen Rotorflügel und Schornsteinkante angewendet.

Eine andere Alternative ist es, den Rotor möglichst nahe an den Schornsteinrand zu setzen, so daß die Rotorflügel daran vorbeistreichen können. Für diese Variante besteht die Möglichkeit, die notwendige Exzentrizität zur Schornsteinachse durch einen exzentrischen Zwischenring mit angepaßter Drehverbindung sicherzustellen, wie dies im Prinzip aus dem Stand der Technik bekannt ist. Die zweite Möglichkeit besteht darin, einen Zwischenring auf den Schornsteinkopf zu plazieren, der nach Art eines Sonnenrad-Getriebes ebenfalls eine Exzenterstellung der Konverterachse zur Turmachse an sich ermöglicht. Der Konverter kann dann je nach Windrichtung auf einer Ringbahn auf dem Schomsteinkopf gedreht werden. Eine weitere Möglichkeit besteht darin, einen Kreisring auf dem Schornsteinkopf zu montieren und darauf einen Wagen oder eine horizontal drehbare Konsole anzuordnen, auf der wiederum der Konverter exzentrisch zur Schornsteinachse gedreht werden kann.

Soweit die gekürzten Schornsteine geringere Durchmesser als die erwähnten 6m erreichen, könnte alternativ vorgesehen sein, den Konverter mit verlängerter Rotorachse auszustatten, so daß das notwendige Distanzmaß für die Rotorflügel zu der Schornsteinkante erreicht wird.

Abgesehen von der Anordnung eines Konverters auf der Schomsteinspitze lassen sich jedoch auch Schornsteine von 300 m Höhe, die nach Rückbau etwa 250 m Höhe besitzen, noch in anderer Weise nutzen, indem eine Tragkonstruktion am Schornsteinmantel angebracht wird, auf der ein Konverter, wie auf einem Schwärmring um den Schornsteinschaft frei verdreht werden kann.

Aus statischen Gründen ist es gegebenenfalls sinnvoll diese Konverter als Parallelkonverter auf gegenüberliegenden Seiten des Schornsteinschaftes anzuordnen. Dabei können erfindungsgemäß Trägerkonstruktionen gewählt werden, die nur eine vertikale Unterstützung haben, sofern sie eine entsprechende Kippmomentsicherung für die 10 t bis 60 t oder noch schwereren Hochleistungskonverter erbringen. In einer alternativen Bauweise wird außer einem derartigen Tragring oder einer derartigen Tragkonstruktion zur Unterstützung des Konvertergewichtes, welche zugleich als Umlaufbahn für den Konverter dient, so ausgelegt sein, daß der Konverter zusätzlich durch eine Zugstange gesichert wird, die ringförmig um Schornsteinschaft oberhalb des Konverters angeordnet ist.

In einigen Fällen, wenn besondere statische oder dynamische Randbedingungen herrschen, kann es erfindungsgemäß auch sinnvoll sein, diese Zugstange vom Konverter bis zur gegenüberliegenden Seite des Schornsteines zu führen, um Zug- und Druckkräfte oder entsprechende Schwingungen gegeneinander aufzuheben.

Bei sehr hohen Türmen und Verwendung von Hochleistungskonvertern können sogar eine Vielzahl von Konvertern an derartigen, den Schornstein umgreifenden, Tragvorrichtungen angeordnet werden. Dabei hängt es jeweils von den statischen und dynamischen Randbedingungen sowie der aerodynamischen Zweckmäßigkeit ab, in welcher Anzahl und in welcher Höhe es technisch und wirtschaftlich sinnvoll ist, Konverter z. B. paarweise oder abwechselnd paarweise und einzelne Konverter untereinander am Turmschaft unterzubringen.

Wichtigstes Kriterium ist, daß möglichst große Rotorflächen in möglichst großer Höhe gestaffelt am Schornstein unterzubringen sind.

Einige Ausführungsbeispiele der Erfindung sind in der schematischen Zeichnung dargestellt.

Es zeigen

Figur 1:      eine Windenergieanlage auf einem erfindungsgemäß rückgebauten Schornstein und einem darauf befestigten oberen zylindrischen Stahlturm mit einer Befestigung zwischen beiden Turmteilen nach Variante 1 in einer Gesamtansicht,

Figur 2:      das Mittelstück einer erfindungsgemäßen Windenergieanlage mit einem rückgebauten Schornstein und einem darauf befestigten, oberen konischen Stahlturm mit einer Befestigung zwischen beiden Turmteilen nach Variante 2 in einer Seitenansicht und

Figur 3:      ein Verbindungsstück eines zweigliedrigen Turmes einer Windenergieanlage mit in das obere Ende des Betonschornsteines hineingestellten Stahlrohrturmteil nach Variante 3 mit der Übertragung der vertikalen und horizontalen Kräfte über Ringe oder Konsolen im Abstand größer dem Durchmesser des Stahlrohrturmteiles im Schnitt.

Figur 4, 5      Windenergieanlage mit umlaufenden Tragring für Konverter am Schornstein;

Figur 6, 7      Windenergieanlage mit Tragring bzw.

Exzenter auf dem Schornstein;

Figuren 8-10      Mehrfachkonverter in optimierter Anordnung am Schornstein.

Im folgenden sind identische oder gleichwirkende Bauteile mit denselben Bezugsziffern versehen.

Figur 1 zeigt das obere Ende des umgerechneten und umgenutzten Stahlbetonschornsteines, der so verändert ist, daß darauf ein oberer Stahlturm angeordnet werden kann. Die Windenergieanlge besteht so aus einem unteren, auf einem Fundament 22 ruhenden Schornstein 1 und einem darauf befestigten oberen Stahlturm 6. Dazu ist der Turmabschluß 3 am oberen Ende des Schornsteins 1 nach Variante 1 oder 2 (Fig. 2) mit einem Aufnahmeteil 4 oder Kragen 5 versehen, die seinerseits in der Lage sind, einen zylindrischen bzw. konischen Teil 6, 7 des konvertertragenden Turms aufzunehmen. Der Konverter 2 mit seinen Rotorflügeln 9 und dem Drehwerk 10 übt seine normale Funktion ohne Beeinträchtigung durch das untere Schornsteinturmstück 1 aus, weil die Rotorflügel seitlich des Turmes oder mit entsprechender Höhe der Rotorachse 20 über den Schornsteinrand rotieren.

Im Turmabschluß 3 sind außer den spezifischen Voraussetzungen für das Aufnahmeteil 4 oder Kragen 5 auch der innere Aufstiegsdurchgang und die Leitungsverlegung integriert und außen der notwendige Geländerschutz 11 der Arbeitsbühne angebracht.

Figur 2 stellt die erfindungsgemäße Lösung nach Variante 2 dar, wenn das Aufnahmeteil nicht direkt in den Schaft des Schornsteins 1 integriert wird, sondern als spezifisches Bauteil mit den errechneten, den statischen und dynamischen Kräften und Maßen entsprechenden, Ausführungsformen sowohl am Turm 1 verschraubt wird als auch über den integrierten Schraubenkragen 5 den oberen Stahlrohrturm 7 aufnimmt.

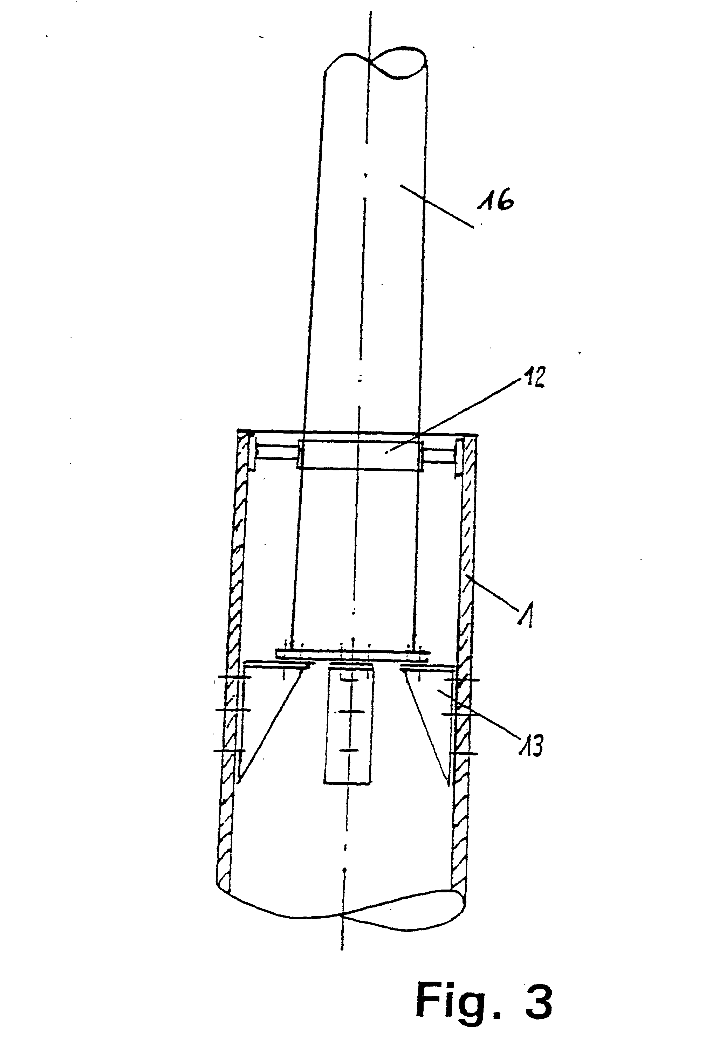

Figur 3 zeigt die erfindungsgemäße Lösung nach Variante 3, indem das Stahlrohrturmteil 16 in einer Länge, die wesentlich größer als der Durchmesser des Fußes des Stahlrohrturmteiles ist, in den Turm 1 von oben hineingestellt wird. Seine Eigenmasse und die vertikalen Kraftanteile aus den Windbelastungen auf einen am inneren Durchmesser des Turmes 1 angebrachten Ring oder mehrere Konsolen 13 und die horizontalen Kräfte zusätzlich über einen Stützring 12 oder mehrere Stützkonsolen am oberen Ende Turmes 1 abstützt.

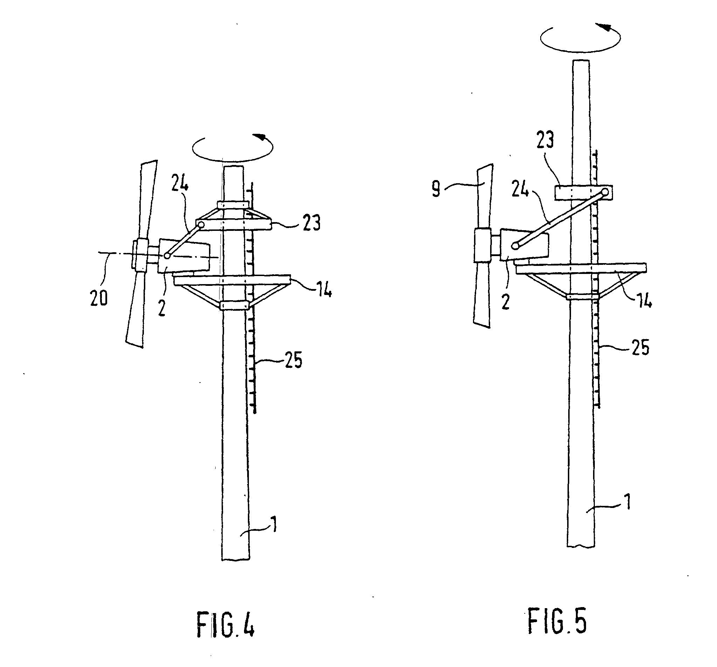

Figur 4 macht die erfindungsgemäße Lösung deutlich, wie der Konverter 2 außen um den Turm 1 auf einem Tragring 14 drehbar gelagert wird, indem die vorhandenen Kippkräfte - soweit der Tragring 14 nicht eine kippmomentübertragende, gestützte Einrichtung ist - durch Zugstange 24 zur Haltekonstruktion 23 in entsprechender Höhe über dem Tragring 14 aufgenommen werden. Die gesamte Konstruktion ist dabei so ausgebildet, daß die für Wartungsarbeiten erforderlichen Hilfskonstruktionen wie Aufstiegsleitern 25 oder in der Zeichnung nicht dargestellte Aufzüge, Arbeitsbühnen und Hebezeuge, die Funktionsfähigkeit der Windenergiean lage nicht behindernd innenseitig am Betonschornstein verlegt sind bzw. die außen vorhandenen Leitern benutzt werden.

Figur 5 offenbart die erfindungsgemäße Lösung, wenn die vorhandenen Kippkräfte bei entsprechenden Dimensionen des Turmes 1 günstiger auf der dem Konverter 2 gegenüberliegenden Turmseite mittels einer verlängerten Zugstange 24 eingeleitet werden.

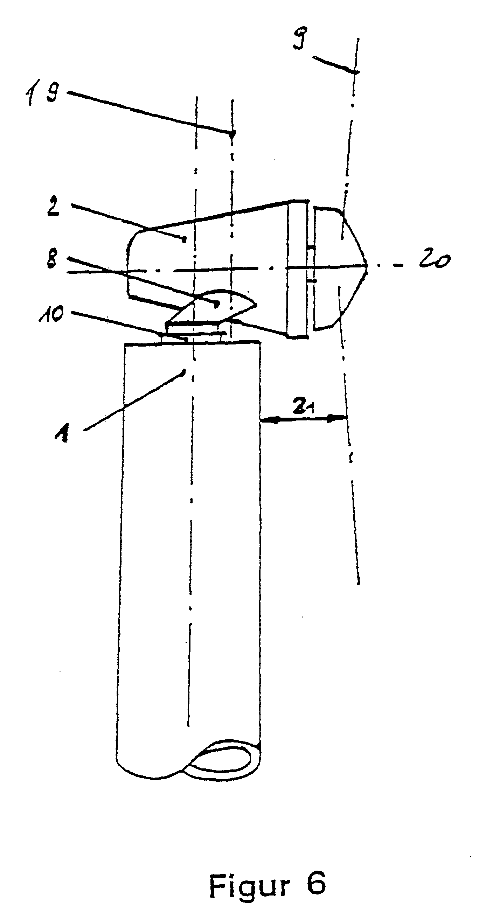

Figur 6 zeigt, wie Konverter 2 zur Gewährleistung der ausreichenden Flügeldistanz 21 zwischen der Außenkante des Turmes 1 und Rotorflügeln 9 über einen exzentrischen Träger 8 zwischen der vertikalen Konverter-Drehachse 19 des Konverters 2 und dem konzentrischen Drehwerk 10 am Schornstein 1 angeordnet wird.

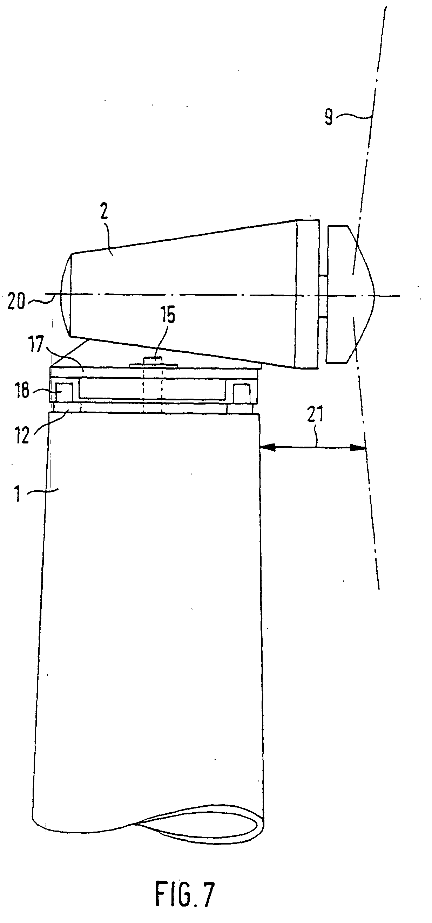

Figur 7 stellt dar, wie der Konverter 2 mit großem Leistungsvermögen durch seine Abmessungen und Masse sowie zur Gewährleistung der ausreichenden Flügeldistanz 21 insbesondere bei sehr großen Turmabmessungen, von z.B. fünf Meter Durchmesser an der neuen Schornsteinspitze über einen zentrischen Lauf- und Tragring 14 auf einen Zwischenrahmen 17 mit konzentrisch angeordneten Laufrollen 18 und mittigen Sicherungsbolzen 15 auf dem oberen Rand des Turmes 1 angeordnet wird. Einer der Ringe oder die Rollen können angetrieben sein, um den Konverter 2 bei Bedarf in Leestellung oder eine Position für Montagearbeiten zu bringen.

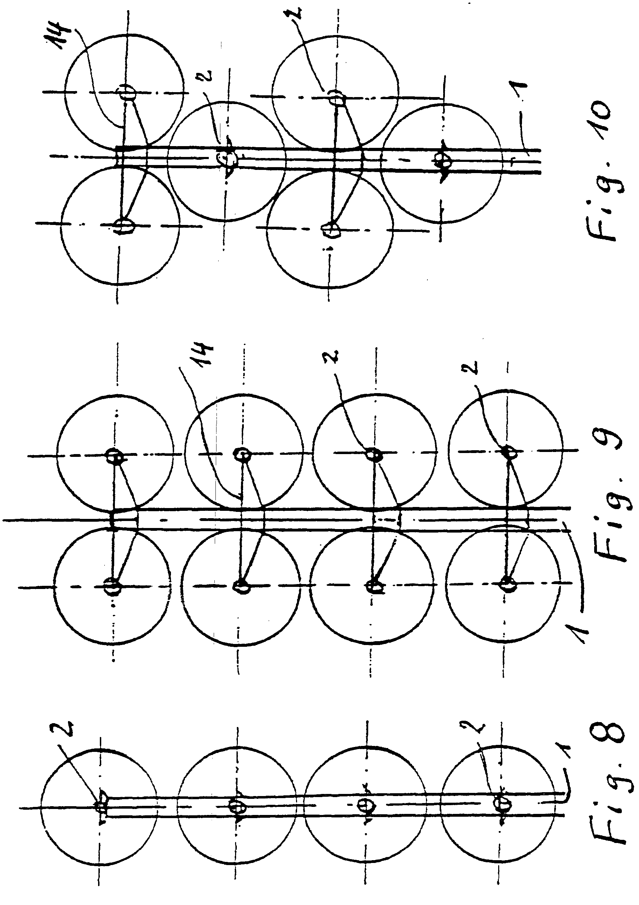

Figur 8 zeigt vier Konverter 2 übereinander. Die drei unteren sind angeordnet auf Tragringen 14, welche als den Schornstein 1 umringende Halterungen abgebildet sind, ähnlich den Anordnungen in Figur 4,5, jedoch nur als ein Kippmoment übernehmende Stützkonstruktion, ohne die Zugstange 24 und der Haltekonstruktion 23. Der obere Konverter 2 kann dapagen wie in den Figuren 6, 7 dargestellt, angeordnet sein oder auch durch eine Ausführung gemäß Fig. 1 bis 3 ersetzt werden.

Figur 9 zeigt die parallele Anordnung von je zwei auf einem Tragring 14 angeordneten konvertern, während Figur 10 abwechselnd paarweise angeordnete Konverter 2 mit dazwischenliegenden einzelnen Konvertern zeigt. Diese Anordnung oder eine Mischform der jeweiligen Anordnungen gemäß den Figuren 1 bis 10 ist in den Fällen vorzusehen, die aus bestimmten statischen oder dynamischen Zwängen resultieren.

Sollte die schwingungstechnische oder Tragfähigkeits-Analyse ergeben, daß z.B. die Belastung mit Konvertern der 1500 kW - Klasse mit Rotorkreisdurchmesser von 65 m bei Gewichten von bis zu etwa 100 t eine Anordnung gemäß Fig. 9 verbietet, könnte auf die Anordnung gemäß Figur 8 oder 10 ausgewichen werden. Durch die Staffelung der Aggregate gemäß Fig. 10, unter Berücksichtigung der aerodynamischen Abstandsbedingungen, läßt sich dann für die zwischen den Parallelkonvertern angeordneten Einzelkonverter zusätzliche Höhe mit windreichen Regionen gewinnen.

Bei diesen Anordnungen in den Figuren 8 bis 10 wird von einer Schornsteinhöhe von z.B. 300 m ausgegangen mit Höhen der Tragringe oder Befestigungen der Konverter in den Höhen 300 m, 220 m, 140 m und 60 m.

Bezuaszeschenliste

| | |
|---|---|
| 1 | Schornstein |
| 2 | Konverter |
| 3 | Turmabschluß |
| 4 | Aufnahmeteil |
| 5 | Bolzenkragen |
| 6 | Stahlturm |
| 7 | Stahlturm |
| 8 | Träger |
| 9 | Rotorflügel |
| 10 | Drehwerk |
| 11 | Geländer |
| 12 | Stützring |
| 13 | Konsole |
| 14 | Tragring |
| 15 | Sicherungsbolzen |
| 16 | Stahlrohrturm |
| 17 | Zwischenrahmen |
| 18 | Laufrollen |
| 19 | Konverterdrehachse |
| 20 | Rotorachse |
| 21 | Flügeldistanz |
| 22 | Fundament |
| 23 | Haltekonstruktion |
| 24 | Zugstange |
| 25 | Leiter |

**Patentansprüche**

1. Verfahren zur Herstellung einer Windenergieanlage, bei dem ein Kraftwerks- oder Industrieschornstein aus Stahlbeton als Turm (1) für einen Windkonverter (2) großer elektrischer Leistung mit einem Rotor mit im wesentlichen horizontal angeordneter Rotorachse (20) und an derem einem Ende fliegend gelagerten Rotorflügeln (9) verwendet wird und ein Stahlsockel (6, 7, 12, 14, 16) zur Lagerung des Windkonverters derart auf den Schornstein aufgesetzt wird, dass die Rotorflügel den Schornstein in vorbestimmbaren Abstand (21) passieren können, **dadurch gekennzeichnet, dass** ein stillgelegter Schornstein verwendet wird, und dass der stillgelegte Schornstein so gekürzt wird, dass er insbesondere die statischen und dynamischen Belastungen der Windenergieanlage aufnehmen kann.

2. Verfahren nach Anspruch 1, **dadurch gekennzeichnet, dass** der Stahlsockel als Turmabschluss mit Mitteln zur Aufnahme einer Halterung für den Windkonverter ausgebildet wird.

3. Verfahren nach Anspruch 2, **dadurch gekennzeichnet, dass** als Mittel zur Aufnahme der Halterung (6, 7) ein mit entsprechender Bewehrung und mit angegossenem Schraubenkragen (4) ausgebildeter Betonschaft einschließlich einem inneren, zentrischen Durchgang verwendet wird.

4. Verfahren nach Anspruch 2 oder 3, **dadurch gekennzeichnet, dass** als Mittel zur Aufnahme der Halterung gleichmäßig am Umfang verteilte speziell ausgebildete Bohrungen mit Hülsen zur Aufnahme von hochfesten Schraubenbolzen zur Befestigung eines mehrarmigen kombinierten Trägerteiles incl. dem Schraubenkragen verwendet werden.

5. Verfahren nach einem der vorhergehenden Ansprüche, **dadurch gekennzeichnet, dass** der Stahlsockel als zylindrisch oder konisch geformter Stahlturm (6 oder 7) ausgebildet wird, dessen Basis am Kopf des gekürzten Schornsteins (1) verankert wird.

6. Verfahren nach einem der Ansprüche 3 bis 5, **dadurch gekennzeichnet, dass** der Stahlsockel (16) mit einer Länge, die größer als sein Durchmesser ist, in den Stahlbetonturm (1) hineingestellt und am Stahlbetonturm (1) mittels einer Konsole (13), einem die horizontalen Kräfte auffangenden Stützring (12) und durchgehenden Ringen zur Aufnahme der vertikalen Kräfte versehen wird.

7. Verfahren nach Anspruch 1, **dadurch gekennzeichnet, dass** als Stahlsockel für den Konverter (2) ein Tragring (14) mit einer Konstruktion verwendet wird, auf denen die daran befestigten, einzelnen oder mehreren, auch paarweise, Konverter (2) sich außen um den Trum konzentrisch bewegen und in die jeweilige Stellung zum Wind bewegt werden können.

8. Verfahren nach Anspruch 1 oder 7, **dadurch gekennzeichnet, dass** als Haltekonstruktion des Konverters (2) ein Haltering (23) verwendet wird, der auf die dem Konverter (2) gegenüberliegende Seite mit einer Zugstange (24) außen um den Turm greift.

9. Verfahren nach einem der Ansprüche 1, 7, 8, **dadurch gekennzeichnet, dass** eine für eine Mehrfachanordnung der Konverter (2) notwendige Tragkonstruktion einschließlich der Trag- (14) und Halteringe (23) in ihren Abmessungen um eines solches Maß größer als der Außendurchmesser des Turmes bemessen werden, damit Hilfskonstruktionen wie Aufstellleiter (25), Aufzug, Arbeitsbühnen oder Hebezeuge innerhalb dieser Tragkonstruktion und Ringe angeordnet werden können.

10. Verfahren nach Anspruch 1 oder 7, **dadurch gekennzeichnet, dass** der Tragring (14) lediglich als eine kippmomentaufnehmende unterstützte Konstruktion ausgebildet wird.

11. Verfahren nach einem der vorhergehenden Ansprüche, **dadurch gekennzeichnet, dass** an einem Turm mehrere Konverter (2) übereinander und/oder nebeneinander angeordnet werden.

12. Verfahren nach Anspruch 1, **dadurch gekennzeichnet, dass** am oberen Ende des Turmes angebrachte Konverter (2) eine exzentrische Tragkonstruktion (8) oder einen Zwischenrahmen (17) zwischen der Drehachse (19) des Konverters (2) und einer konzentrisch auf dem Turm sitzenden Drehvorrichtung (10) mit Lauf- und Triebring (18) aufweist.

**Claims**

1. A method of manufacturing a wind power plant by which a power station or industrial chimney made of reinforced concrete is used as a tower (1) for a high power electrical wind converter (2) with a rotor having a substantially horizontally arranged rotor axis (20) and cantilevered rotor vanes (9) mounted on one end thereof and by which a steel base (6, 7, 12, 14, 16) for carrying the wind converter is placed onto the chimney in such a manner that the rotor vanes are allowed to pass the chimney at a predeterminable distance (21) therefrom, **characterized in that** a disused chimney is used and that the disused chimney is shortened so as to be capable of taking more specifically the static and dynamic loads of the wind power plant.

2. The method according to claim 1, **characterized in that** the steel base is configured as a tower end portion with means for receiving a retaining device for the wind converter.

3. The method according to claim 2, **characterized in that** the means used for receiving the retaining device (6, 7) is a concrete shaft configured with a suited reinforcement and with a bolt collar (4) integrally cast therewith, including an internal central passage.

4. The method according to claim 2 or 3, **characterized in that** the means used for receiving the retaining device are specially designed bores that are evenly distributed about the circumference and are provided with sleeves for receiving high-tensile screw bolts for attaching a multi-armed combined carrier part including the bolt collar.

5. The method according to one of the afore mentioned claims, **characterized in that** the steel base is configured as a cylindrical or conical steel tower (6 or 7) the bottom portion of which is anchored on the head portion of the shortened chimney (1).

6. The method according to any of the claims 3 through 5, **characterized in that** the steel base (16) is inserted into the tower (1) of reinforced concrete to a length greater than its diameter and that the tower (1) of reinforced concrete is provided with a bracket (13), a support ring (12) absorbing the horizontal forces and continuous rings for taking the vertical forces.

7. The method according to claim 1, **characterized in that** the steel base used for the converter (2) is a carrier ring (14) with a construction upon which the converters (2) attached thereto singly or in multiples, and also in pairs, are allowed to move concentrically around the tower on the exterior thereof and to be moved into the respective position relative to the wind.

8. The method according to claim 1 or 7, **characterized in that** the retaining construction of the converter (2) used is a retaining ring (23) which, on the side opposite the converter (2), surrounds the tower on the outer side thereof with a tie rod (24).

9. The method according to one of the claims 1, 7, 8, **characterized in that** a carrier structure including the carrier ring (14) and the retaining ring (23), which is required for a multiple arrangement of the converters (2), is dimensioned to be greater than the outer diameter of the tower by such a dimension that auxiliary structures such as an ascending ladder (25), an elevator, working platforms or hoists can be disposed within said carrier structure and rings.

10. The method according to claim 1 or 7, **characterized in that** the carrier ring (14) is only configured as an assisted construction taking overturning moment.

11. The method according to one of the afore mentioned claims, **characterized in that** a plurality of converters (2) are disposed one above the other and/or next to one another on one tower.

12. The method according to claim 1, **characterized in that** converters (2) mounted at the upper end of the tower have an eccentric carrier structure (8) or an intermediate frame (17) between the axis of rotation (19) of the converter (2) and a rotary device (10) concentrically seated on the tower and provided with a runner and drive ring (18).

## Revendications

1. Procédé de fabrication d'une éolienne selon lequel une cheminée d'usine ou d'une centrale en béton armé est utilisée comme tour (1) pour un convertisseur d'énergie éolienne (2) électrique de grande puissance avec un rotor dont l'axe (20) est disposé sensiblement horizontalement et présente, à une de ses extrémités, des pales de rotor (9) montées en porte-à-faux, et un socle en acier (6, 7, 14, 16) destiné à porter le convertisseur d'énergie éolienne est placé sur la cheminée de manière à permettre aux pales du rotor de passer à une distance (21) prédéterminable de la cheminée, **caractérisé en ce qu'**on utilise une cheminée mise hors service et que ladite cheminée mise hors service est réduite en hauteur de telle sorte qu'elle est capable d'encaisser notamment les efforts statiques et dynamiques de l'éolienne.

2. Procédé selon la revendication 1, **caractérisé en ce que** le socle en acier est conformé en forme de partie terminale de la tour avec des moyens destinés à recevoir un dispositif de retenue du convertisseur d'énergie éolienne.

3. Procédé selon la revendication 2, **caractérisé en ce que** le moyen destiné à recevoir le dispositif de retenue (6, 7) est une tige en béton pourvue d'une armature appropriée et d'un collet de vis (4) issu de moulage avec celle-ci y compris d'un passage central interne.

4. Procédé selon la revendication 2 ou 3, **caractérisé en ce que** les moyens destinés à recevoir le dispositif de retenue sont des alésages de configuration spéciale uniformément répartis sur la circonférence et munis de manchons destinés à recevoir des boulons filetés très résistants permettant de fixer un élément porteur combiné à bras multiples y compris le collet de vis.

5. Procédé selon l'une quelconque des revendications précédentes, **caractérisé en ce que** le socle en acier est conformé en forme de tour en acier (6 ou 7) cylindrique ou conique dont la base est ancrée sur la tête de la cheminée (1) réduite en hauteur.

6. Procédé selon l'une quelconque des revendications 3 à 5, **caractérisé en ce que** le socle en acier (16) est inséré dans la tour en béton armé (1) sur une longueur supérieure à son diamètre et que la tour en béton armé (1) est pourvue d'une console (13), d'un anneau support (12) encaissant les efforts horizontaux et d'anneaux continus destinés à encaisser les efforts verticaux.

7. Procédé selon la revendication 1, **caractérisé en ce que** le socle en acier utilisé pour le convertisseur (2) est un anneau porteur (14) d'une construction telle que les convertisseurs (2) qui y sont fixés un à un, à plusieurs, ou par paires, sont aptes à se déplacer de façon concentrique et à être amenés dans la position souhaitée par rapport au vent.

8. Procédé selon la revendication 1 ou 7, **caractérisé en ce que** la structure de retenue du convertisseur (2) utilisée est un anneau de retenue (23) qui, sur le côté opposé au convertisseur (2), entoure la tour de l'extérieur avec un tirant.

9. Procédé selon l'une quelconque des revendications 1, 7, 8, **caractérisé en ce qu'**une structure porteuse requise pour un arrangement d'une pluralité de convertisseurs (2), l'anneau porteur (14) et l'anneau de retenue (23) y compris, est de dimension supérieure au diamètre extérieur de la tour, cette dimension étant choisie de manière à permettre le positionnement, au sein de cette structure porteuse et des anneaux, de constructions d'appoint telles une échelle (25), un monte-charge, des plates-formes de service ou un équipement de levage.

10. Procédé selon la revendication 1 ou 7, **caractérisé en ce que** l'anneau porteur (14) est conformé sous forme de construction assistée encaissant les couples de renversement uniquement.

11. Procédé selon l'une quelconque des revendications précédentes, **caractérisé en ce qu'**une pluralité de convertisseurs (2) sont disposés l'un par-dessus l'autre et/ou l'un à côté de l'autre sur une tour.

12. Procédé selon la revendication 1, **caractérisé en ce que** des convertisseurs (2) fixés à l'extrémité supérieure de la tour comportent, entre l'axe de rotation (19) du convertisseur (2) et un dispositif de rotation (10) avec anneau de roulement et d'entraînement (18) placé de façon concentrique sur la tour, une structure porteuse (8) désaxée ou un cadre intermédiaire (17).

Fig. 2

Fig. 1

Fig. 3

FIG.4

FIG.5

Figur 6

FIG.7

Fig. 10

Fig. 9

Fig. 8